# EUROPEAN PATENT SPECIFICATION

(11) **EP 1 682 829 B1**
(45) Date of publication and mention of the grant of the patent: **30.12.2009**
(21) Application number: 03751543.4
(22) Date of filing: 14.10.2003
(51) Int. Cl.: F24F 7/08

(54) **VENTILATOR**
VENTILATOR
VENTILATEUR

(43) Date of publication of application: 26.07.2006
(73) Proprietor: LG Electronics, Inc., Seoul 150-010 (KR)
(72) Inventor: SHIN, Soo-Yeon, Booyoung Apt. 1202-902, 621-833 Kyungsangnam-Do (KR); CHO, Min-Chul, 616-830 Busan (KR); LEE, Seonghwan, 641-091 Kyungsangnam-Do (KR)
(74) Representative: Wunderlich, Rainer
(86) International application number: PCT/KR2003/002127
(87) International publication number: WO 2005/036065

(56) References cited:
- JP-A- 2 010 040
- JP-A- 3 156 235
- JP-A- 7 332 727

## Description

### TECHNICAL FIELD

The present invention relates to a ventilator for ventilating an indoor space by externally discharging indoor air and internally sucking outdoor air.

### BACKGROUND ART

In general, the carbon dioxide content of air increases in a hermetically sealed space with the passage of time because of breathing of living objects, and has detrimental effects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked. Thus, a temperature of indoor air is higher than a cooling temperature, to reduce cooling efficiency. In the case that heating and ventilating operations are simultaneously performed indoors, heated indoor air is exhausted and cooled outdoor air is sucked. As a result, the temperature of indoor air is lower than a heating temperature, to reduce heating efficiency.

Therefore, the ventilator further includes a heat exchanger for exchanging heat between indoor air and outdoor air.

In detail, according to Japanese Laid-Open Patent Application 11-287492 shown in Fig. 1, an outdoor air suction hole 4 a for sucking outdoor a ir and an indoor air discharge hole 6b for discharging indoor air are formed on one surface of a rectangular casing 2, an outdoor air discharge hole 4b for discharging outdoor air and an indoor air suction hole 6a for sucking indoor air are formed on the other surface of the casing 2, a heat exchanger 8 for exchanging heat by forming passages for separately flowing indoor air and outdoor air is installed in the center of the casing 2 to cross the casing 2, and an air supply fan 10 and an air exhaust fan 20 are installed in both edges of the casing 2 to be positioned inside the outdoor air discharge hole 4b and the indoor air discharge hole 6b.

In addition, an air path for guiding outdoor air sucked from the outdoor air suction hole 4a to the heat exchanger 8 to be discharged to the outdoor air discharge hole 4b, and an air path for guiding indoor air sucked from the indoor air suction hole 6a to the heat exchanger 8 to be discharged to the indoor air discharge hole 6b are formed in the casing 2.

Here, the heat exchanger 8 is installed to be connected or disconnected through a checking hole 2a formed in the center of one surface of the casing 2.

On the other hand, as disclosed in Japanese Laid-Open Patent Application 09-137984 shown in Figs. 2 and 3, an outdoor air suction hole 34a for sucking outdoor air and an indoor air discharge hole 36b for discharging indoor air are formed on one surface of a rectangular casing 32, an outdoor air discharge hole 34b for discharging outdoor air and an indoor air suction hole 36a for sucking indoor air are formed on the other surface of the casing 32, a heat exchanger 38 for forming passages for separately flowing outdoor air and indoor air is installed in the center of the casing 32 to cross the casing 32, and an air supply fan 40 for sucking outdoor air and an air exhaust fan 45 for discharging indoor air are installed in the center of one surface of the casing 32 and the center of the other surface of the casing 32, respectively.

JP 03156235 A discloses a heat exchanging type ventilation device to allow maintenance work for a heat exchanging element, wherein a heat exchanging element, an air discharging blower device and an air feeding blower device are fitted to or removed from an opening arranged in a lower surface of a main body. The device comprises an air discharging motor in an air discharging blower device and an air feeding motor in an air feeding blower device. For maintenance work or for inspection purposes an inspection lid, which is arranged in an opening, is removed, and a heat exchanging element and a heat exchanging element storing frame are removed. The air discharging blower device and the air feeding blower device arranged at both sides of the main body can be removed one by one from a spacing within the main body from which the heat exchanging element storing frame is removed.

JP 07332727 A discloses a heat exchanging ventilation device. The assembly includes air sending units, which are arranged near the side unit with a posture, wherein the motors are faced to the sides of a casing defining an inserting and extracting port for an air sending unit.

US 5372182 discloses a modular regenerator pre-conditioner air system comprising an exhaust inlet air module, a regenerator module and a fresh inlet air module. The modular component design allows for a variety of adaptive installation configurations.

In addition, partitioning units 37a and 37b for guiding outdoor air sucked from the outdoor air suction hole 34a to the heat exchanger 38, or guiding indoor air sucked from the indoor air suction hole 36a to the heat exchanger 38 are installed in the casing 32, and ducts 39a and 39b for guiding outdoor air passing through the heat exchanger 38 to be discharged to the outdoor air discharge hole 34b, or guiding indoor air passing through the heat exchanger 38 to be discharged to the indoor air discharge hole 36b are installed in the casing 32, to form air paths for separately flowing outdoor air and indoor air.

The heat exchanger 38 is installed in the casing 32 to be connected or disconnected through a checking hole 32a formed in the center of one surface of the casing 32. The edges of the heat exchanger 38 are slidably fixed into rails 35 formed in both ends of the partitioning units 37a and 37b and the top and bottom inside surfaces of the casing 32.

However, various components such as the heat exchanger, the air supply fan and the air exhaust fan are installed in the casing of the ventilator, which increases the weight and size of the ventilator. It is thus difficult for the operator to carry and install the ventilator on a wall or ceiling.

Moreover, the air supply fan, the air exhaust fan and the motors for driving the fans are installed in the casing of the ventilator where the heat exchanger has been installed. As a result, the casing must be disassembled to examine the air supply fan, the air exhaust fan and the motors, which complicates the examination and repair process of the inside components.

### DISCLOSURE OF THE INVENTION

An object of the present invention is to provide a ventilator which can be easily carried and installed by an operator.

Another object of the present invention is to provide a ventilator which allows an operator to easily examine and repair various inside components of a casing.

In order to achieve the above-described objects of the invention, there is provided a ventilator including: a heat exchange unit having a heat exchanger for exchanging heat by crossing outdoor air and indoor air along first and second passages; an outdoor unit being installed in one side of the heat exchange unit to be connected or disconnected, having an outdoor air suction hole for sucking outdoor air and an indoor air discharge hole for discharging indoor air, and including a first air blowing fan inside; and an indoor unit being installed in the other side of the heat exchange unit to be connected or disconnected, having an outdoor air discharge hole for discharging outdoor air and an indoor air suction hole for sucking indoor air, and including a second air blowing fan inside.

According to one aspect of the invention, an outdoor air passage guide for guiding outdoor air sucked from the outdoor air suction hole to the first passages of the heat exchanger is formed in the outdoor unit, and an indoor air passage guide for guiding indoor air sucked from the indoor air suction hole to the second passages of the heat exchanger is formed in the indoor unit.

According to another aspect of the invention, the first air blowing fan is an air exhaust fan installed inside the indoor air discharge hole, for discharging indoor air, and the second air blowing fan is an air supply fan installed inside the outdoor air discharge hole, for sucking outdoor air.

Preferably, the outdoor air suction hole is formed in one side of one surface of the outdoor unit, the outdoor air discharge hole is formed in the center of one surface of the indoor unit, the indoor air suction hole is formed in the other side of one surface of the indoor unit, and the indoor air discharge hole is formed in the center of one surface of the outdoor unit.

According to yet another aspect of the invention, guide grooves and guide rails engaged with the guide grooves are formed between the outdoor unit and the heat exchange unit, so that the outdoor unit can be slidably connected or disconnected to/from the heat exchange unit. The guide rails are formed on the other side surface of the outdoor unit facing the outdoor air suction hole, and the guide grooves engaged with the guide rails are formed on one side surface of the heart exchange unit.

According to yet another aspect of the invention, guide rails are formed on the top and bottom surfaces of one side of the outdoor unit facing the outdoor air suction hole, and guide grooves engaged with the guide rails are formed on the top and bottom surfaces of one side of the heat exchange unit so that the outdoor unit can be slidably connected or disconnected to/from the heat exchange unit. One of casings of the outdoor unit and the heat exchange unit is positioned outside the other casing.

In addition, guide rails are formed on the top and bottom surfaces of one side of the indoor unit facing the indoor air suction hole, and guide grooves engaged with the guide rails are formed on the top and bottom surfaces of the other side of the heat exchange unit so that the indoor unit can be slidably connected or disconnected to/from the heat exchange unit. One of casings of the indoor unit and the heat exchange unit is positioned outside the other casing.

According to yet another aspect of the invention, sealing guide grooves are formed on one side surfaces of the outdoor unit and the indoor unit, and guide rails are formed in both ends of the heat exchanger to be engaged with the sealing guide grooves in order to prevent outdoor air or indoor air from being leaked between the outdoor unit and the indoor unit and the heat exchange unit. The sealing guide grooves are formed in the ends of the outdoor air passage guide and the indoor air passage guide, respectively.

Here, assembly directions of the sealing guide groove formed in the outdoor air passage guide and the sealing guide rail formed in one side end of the heat exchanger are identical to sliding assembly directions of the outdoor unit and the heat exchange unit, or assembly directions of the sealing guide groove formed in the indoor air passage guide and the sealing guide rail formed in the other side end of the heat exchanger are identical to sliding assembly directions of the indoor unit and the heat exchange unit.

Assembly directions of the sealing guide groove formed in the outdoor air passage guide and the sealing guide rail formed in one side end of the heat exchanger can be identical to assembly directions of the sealing guide groove formed in the indoor air passage guide and the sealing guide rail formed in the other side end of the heat exchanger.

### BRIEF DESCRIPTION OF THE DRAWINGS

The present invention will become better understood with reference to the accompanying drawings which are given only by way of illustration and thus are not limitative of the present invention, wherein:

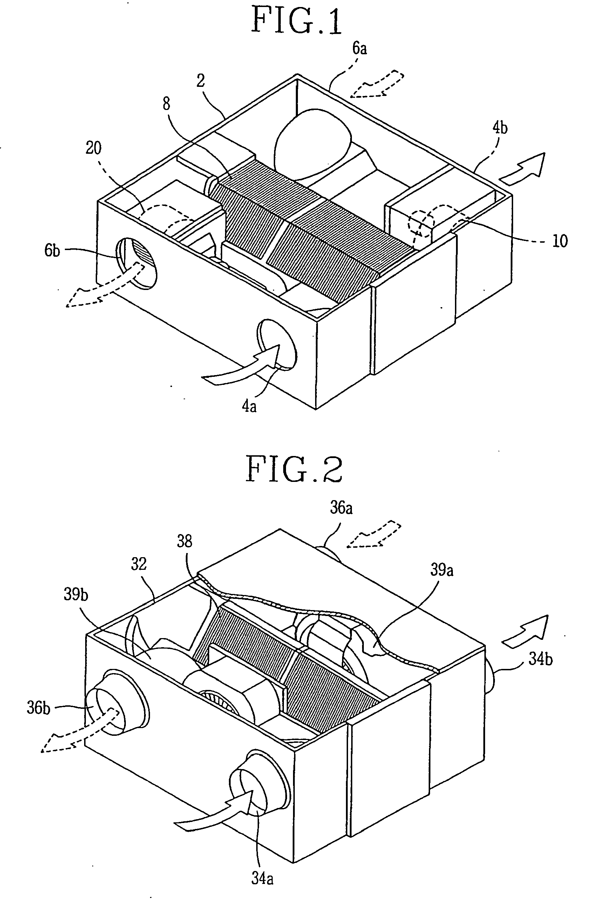

Fig. 1 is a perspective view illustrating one example of a conventional ventilator;
Fig. 2 is a perspective view illustrating another example of the conventional ventilator;

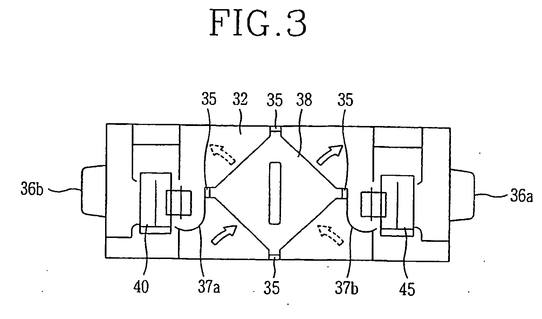

Fig. 3 is a cross-sectional view illustrating another example of the conventional ventilator;
Fig. 4 is a perspective view illustrating unit disassembly of a ventilator in accordance with the present invention;
Fig. 5 is a perspective view illustrating the ventilator in accordance with the present invention;
Fig. 6 is a plan view illustrating the ventilator in accordance with the present invention;
Fig. 7 is a cross-sectional view taken along line A-A of Fig. 6; and
Fig. 8 is a cross-sectional view taken along line B-B of Fig. 6.

### BEST MODE FOR CARRYING OUT THE INVENTION

Preferred embodiments of the present invention will now be described in detail with reference to the accompanying drawings.

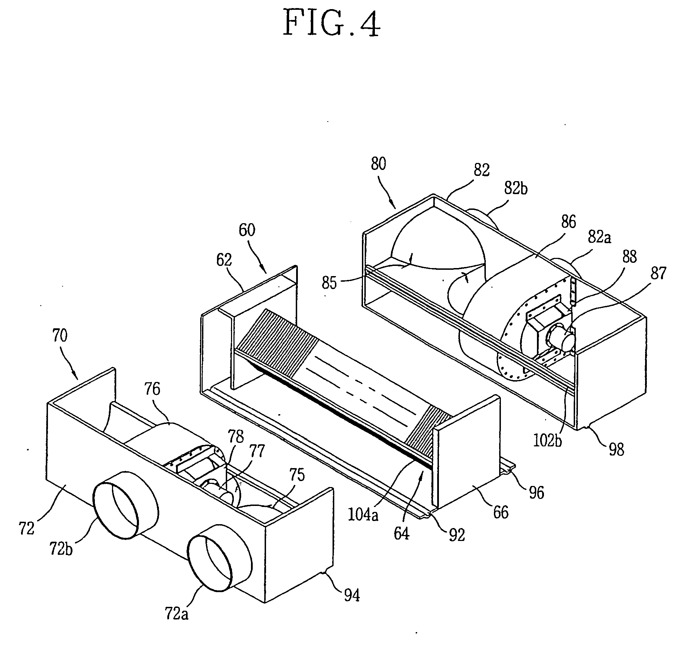

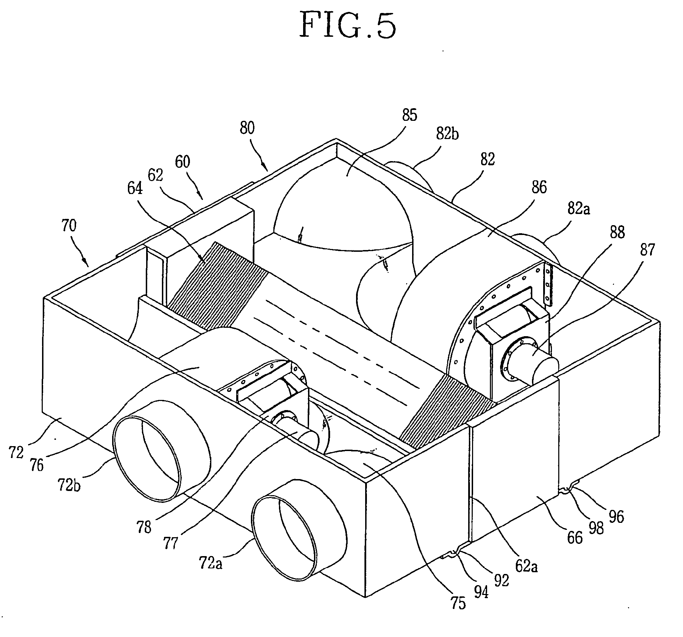

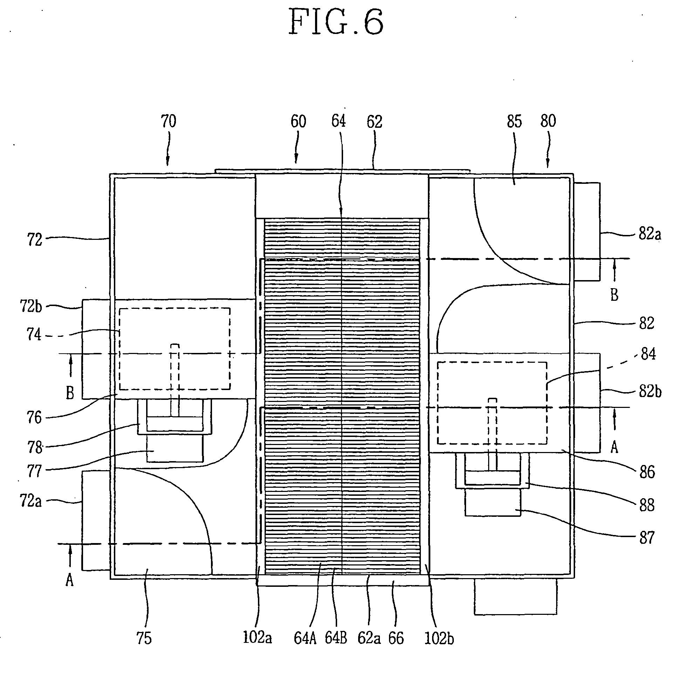

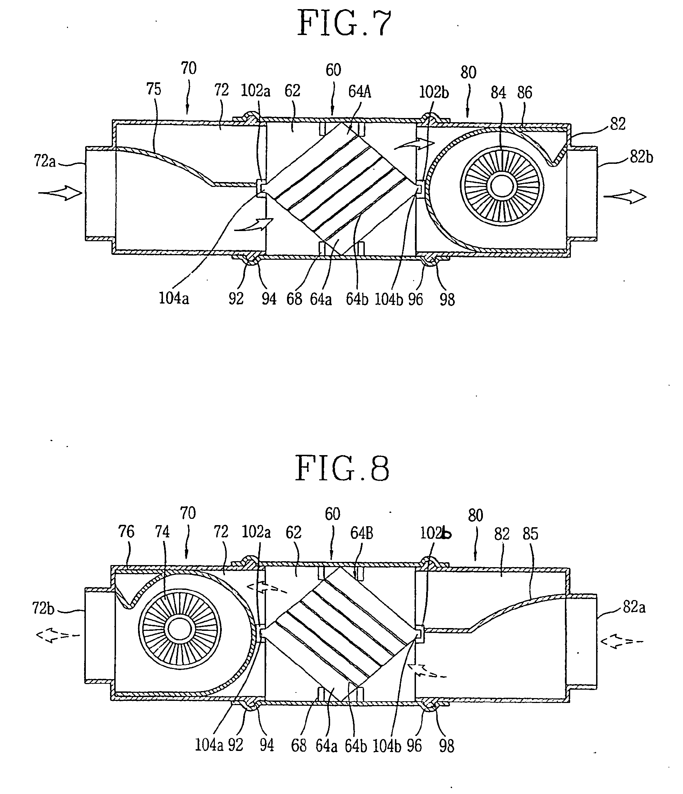

Fig. 4 is a perspective view illustrating unit disassembly of a ventilator in accordance with the present invention, Figs. 5 and 6 are a perspective view and a plan view illustrating the ventilator in accordance with the present invention, and Figs. 7 and 8 are cross-sectional views taken along lines A-A and B-B of Fig. 6.

Referring to Figs. 4 to 6, the ventilator includes a heat exchange unit 60 for exchanging heat by crossing outdoor air and indoor air, an outdoor unit 70 installed in one side of the heat exchange unit 60 to be connected or disconnected, for sucking outdoor air and discharging indoor air, and an indoor unit 80 installed in the other side of the heat exchange unit 60 to be connected or disconnected, for sucking indoor air and discharging outdoor air.

In detail, in the heat exchange unit 60, a heat exchanger 64 formed by stacking a plurality of heat exchange units 64A and 64B is installed inside a heat exchange casing 62 having its one and other side surfaces opened. The heat exchanger 64 is manufactured by alternately stacking the first and second heat exchange units 64A and 64B including different shapes of guide ribs 64b on one side surfaces of rectangular or hexagonal heat exchange films 64a, and forms first and second passages for separately flowing outdoor air and indoor air.

The heat exchanger 64 exchanges heat by guiding outdoor air and indoor air to flow in the crossing directions or facing directions.

Here, outdoor air is sucked from the bottom of one side surface of the heat exchanger 64 and discharged to the top of the other side surface of the heat exchanger 64, and indoor air is sucked from the bottom of the other side surface of the heat exchanger 64 and discharged to the top of one side surface of the heat exchanger 64.

On the other hand, a checking hole 62a is formed in the end of the heat exchange casing 62, so that the heat exchanger 64 can be slidably connected or disconnected inside the heat exchange casing 62. A plate shape checking casing 66 is removably mounted on the checking hole 62a. In detail, the top and bottom ends of the heat exchanger 64 are inserted into guide grooves 68 formed long on the top and bottom inside surfaces of the heat exchange casing 62, so that the heat exchanger 64 can be slidably connected or disconnected. Accordingly, the heat exchanger 64 can be easily connected or disconnected to/from the heat exchange casing 62, and air leakage is prevented between the top and bottom ends of the heat exchanger 64 and the heat exchange casing 62.

In a state where the outdoor unit 70 and the indoor unit 80 are coupled to the heat exchange unit 60, an operator can disconnect the heat exchanger 64 through the checking hole 62a and examine various inside components of the outdoor unit 70 and the indoor unit 80.

The outdoor unit 70 further includes an air exhaust fan 74 for discharging indoor air in an outdoor casing 72 having an outdoor air suction hole 72a for sucking outdoor air and an indoor air discharge hole 72b for discharging indoor air on its one side surface.

A suction fan (not shown) for sucking outdoor air can be installed instead of the air exhaust fan 74.

The outdoor unit 70 further includes an outdoor air passage guide 75 for guiding outdoor air sucked from the outdoor air suction hole 72a to the first passages of the heat exchanger 64. The outdoor air passage guide 75 guides outdoor air and indoor air sucked or discharged to/from the outdoor unit 70 to flow in different spaces, especially guides outdoor air to be sucked to the bottom of one side surface of the heat exchanger 64.

Here, the outdoor air suction hole 72a is formed in one side of one side surface of the outdoor casing 72, and the indoor air discharge hole 72b is formed in the center of one side surface of the outdoor casing 72. The outdoor air suction hole 72a and the indoor air discharge hole 72b are connected to outdoor ducts (not shown) connected to the outdoor side.

The air exhaust fan 74 is formed inside the indoor air discharge hole 72b. A sirocco fan for sucking indoor air in the axial direction and discharging sucked air in the radius direction is used as the air exhaust fan 74. The air exhaust fan 74 is inserted into a fan housing 76 installed inside the indoor air discharge hole 72b, and a motor 77 for driving the air exhaust fan 74 is supported in one side of the fan housing 76 by a motor supporting member 78.

Here, the motor 77 is installed toward one surface of the heat exchange casing 62 where the checking hole 62a has been formed, and the air exhaust fan 74 and the motor 77 are disconnected together from the fan housing 76. Therefore, the operator can easily disconnect the air exhaust fan 74 and the motor 77 through the checking hole 62a for examination and repair.

The outdoor unit 70 is slidably connected to one side surface of the heat exchange unit 60. Guide grooves 92 and guide rails 94 engaged with the guide grooves 92 are formed between the other side surface of the outdoor casing 72 and one side surface of the heat exchange casing 62.

In detail, the guide rails 94 are formed long in the length direction on the top and bottom surfaces of one side of the outdoor casing 72 facing the outdoor air suction hole 72a, the guide grooves 92 engaged with the guide rails 94 are formed long in the length direction on the top and bottom surfaces of one side of the heat exchange casing 62, and the outdoor unit 70 is installed to be slidably connected or disconnected in one direction to the heat exchange unit 60, namely the width direction of the heat exchange casing 62.

One of the outdoor casing 72 and the heat exchange casing 62 can be positioned outside the other casing.

Preferably, the rear ends of the guide grooves 92 and the guide rails 94 are blocked to prevent the outdoor unit 70 from moving when the assembly process of the outdoor unit 70 and the heat exchange unit 60 is finished.

The indoor unit 80 further includes an air supply fan 84 for sucking outdoor air in an indoor casing 82 having an outdoor air discharge hole 82a for discharging outdoor air and an indoor air suction hole 82b for sucking outdoor air on its other side surface.

An air exhaust fan (not shown) for discharging indoor air can be installed instead of the air supply fan 84.

The indoor unit 80 further includes an indoor air passage guide 85 for guiding indoor air sucked from the indoor air suction hole 82b to the second passages of the heat exchanger 64. The indoor air passage guide 85 guides outdoor air and indoor air sucked or discharged to/from the indoor unit 80 to flow in different spaces, especially guides indoor air to be sucked to the bottom of one side surface of the heat exchanger 64.

Here, the outdoor air discharge hole 82a is formed in the center of the other side surface of the indoor casing 82, and the indoor air suction hole 82b is formed in one side of the other side surface of the indoor casing 82. The outdoor air discharge hole 82a and the indoor air suction hole 82b are connected to indoor ducts (not shown) connected to the indoor side.

The air supply fan 84 is installed inside the outdoor air discharge hole 82a. Identically to the air exhaust fan 74, a sirocco fan for sucking indoor air in the axial direction and discharging sucked air in the radius direction is used as the air supply fan 84. The air supply fan 84 is inserted into a fan housing 86 installed inside the outdoor air discharge hole 82a, and a motor 87 for driving the air supply fan 84 is supported in one side of the fan housing 86 by a motor supporting member 88.

Identically to the motor 77 connected to the air exhaust fan 74, the motor 87 is installed toward one surface of the heat exchange casing 62 where the checking hole 62a has been formed, and the air supply fan 84 and the motor 87 are disconnected together from the fan housing 86. Accordingly, the operator can easily disconnect the air supply fan 84 and the motor 87 through the checking hole 62a for examination and repair.

Identically to the outdoor unit 70, the indoor unit 80 is slidably connected to the other side surface of the heat exchange unit 60. Guide grooves 96 and guide rails 98 engaged with the guide grooves 96 are formed between one side surface of the indoor casing 82 and the other side surface of the heat exchange casing 62.

In detail, the guide rails 98 are formed long in the length direction on the top and bottom surfaces of one side of the indoor casing 82 facing the outdoor air discharge hole 82a and the indoor air suction hole 82b, the guide grooves 96 engaged with the guide rails 98 are formed long in the length direction on the top and bottom surfaces of the other side of the heat exchange casing 62, and the indoor unit 80 is installed to be slidably connected or disconnected in one direction to the h eat exchange unit 60, namely the width direction of the heat exchange casing 62.

One of the indoor casing 82 and the heat exchange casing 62 can be positioned outside the other casing.

Preferably, the rear ends of the guide grooves 96 and the guide rails 98 are blocked to prevent the indoor unit 80 from moving when the assembly process of the indoor unit 80 and the heat exchange unit 60 is finished.

When the assembly process of the outdoor unit 70, the indoor unit 80 and the heat exchange unit 60 is finished, a special sealing process can be performed to prevent outdoor air or indoor air from being externally leaked between the outdoor unit 70 and the heat exchange unit 60 or the indoor unit 80 and the heat exchange unit 60.

However, when the outdoor unit 70 and the indoor unit 80 are respectively coupled to the heat exchange unit 60, air leakage can be prevented between the outdoor unit 70 and the indoor unit 80 and the heat exchange unit 60, and mixing of outdoor air and indoor air can also be prevented.

For example, sealing guide grooves 102a and 102b are formed long in the length direction on one side surface of the outdoor unit 70 and the other side surface of the indoor unit 80, and sealing guide rails 104a and 104b are formed in the length direction in both ends of the heat exchanger 64 to be engaged with the sealing guide grooves 102a and 102b. The sealing guide grooves 102a and 102b are formed in the end of the outdoor air passage guide 75 and the end of the indoor air passage guide 85, respectively.

Here, assembly directions of the sealing guide groove 102a formed in the outdoor air passage guide 75 and the sealing guide rail 104a formed in one side end of the heat exchanger 64 are identical to sliding assembly directions of the outdoor unit 70 and the heat exchange unit 60, so that the outdoor unit 70 can be coupled to the heat exchange unit 60 and the heat exchanger 64 can be supported by the outdoor unit 70.

In addition, assembly directions of the sealing guide groove 102a formed in the indoor air passage guide 85 and the sealing guide rail 104b formed in the other side end of the heat exchanger 64 are identical to sliding assembly directions of the indoor unit 80 and the heat exchange unit 60, so that the indoor unit 80 can be coupled to the heat exchange unit 60 and the heat exchanger 64 can be supported by the indoor unit 80.

Preferably, in order for the operator to assemble the outdoor unit 70 and the indoor unit 80 with the heat exchange unit 60 in one side in one direction, assembly directions of the sealing guide groove 102a formed in the outdoor air passage guide 75 and the sealing guide rail 104a formed in one side end of the heat exchanger 64 are identical to assembly directions of the sealing guide groove 102b formed in the indoor air passage guide 85 and the sealing guide rail 104b formed in the other side end of the heat exchanger 64.

Even if the guide grooves 92 and 96 and the guide rails 94 and 98 formed between the outdoor casing 72 and the indoor casing 82 and the heat exchange casing 62 are omitted, the sealing guide grooves 102a and 102b and the sealing guide rails 104a and 104b formed between the outdoor air passage guide 75 and the indoor air passage guide 85 and the heat exchanger 64 can slidably couple the outdoor unit 70 and the indoor unit 80 to the heat exchange unit 60, respectively.

The assembly process and operation of the ventilator will now be described.

The heat exchange unit 60, the outdoor unit 70 and the indoor unit 80 are individually formed, so that the operator can easily carry and install them in wanted positions. The outdoor unit 70 and the indoor unit 80 are slidably coupled to one side surface and the other side surface of the heat exchange unit 60, so that the operator can easily disassemble the assembly to examine and repair the inside components.

In detail, the guide rails 94 formed on the other side surface of the outdoor casing 72 are slidably inserted into the guide grooves 92 formed on one side surface of the heat exchange casing 62, and thus the outdoor unit 70 is coupled to the heat exchange unit 60, and the guide rails 98 formed on one side surface of the indoor casing 82 are slidably inserted into the guide grooves 96 formed on the other side surface of the heat exchange casing 62, and thus the indoor unit 80 is coupled to the heat exchange unit 60.

Because the outdoor casing 72 and the heat exchange casing 62, and the indoor casing 82 and the heat exchange casing 62 are respectively engaged, air leakage is prevented between the outdoor unit 70 and the heat exchange unit 60 and between the indoor unit 80 and the heat exchange unit 60, and air flow efficiency and heat exchange efficiency are improved.

The heat exchanger 64 is slidably mounted in the heat exchange casing 62 through the checking hole 62a. The sealing guide rails 104a and 104b formed in both ends of the heat exchanger 64 are slidably inserted into the sealing guide grooves 102a and 102b formed in the ends of the outdoor air passage guide 75 and the indoor air passage guide 85.

In a state where the heat exchanger 64 is installed in the heat exchange casing 62 of the heat exchange unit 60, if the outdoor unit 70 and the indoor unit 80 are intended to be assembled, the outdoor unit 70 and the indoor unit 80 are coupled to the heat exchange unit 60, and the heat exchanger 64 is directly coupled to the outdoor unit 70 and the indoor unit 80.

Accordingly, the heat exchanger 64 is installed to be directly engaged with the outdoor air passage guide 75 and the indoor air passage guide 85, to prevent mixing of outdoor air and indoor air and improve air flow efficiency and heat exchange efficiency.

The operation of the ventilator comprised of the outdoor unit 70, the heat exchange unit 60 and the indoor unit 80 will now be explained. As shown in Fig. 7, when the air supply fan 84 is operated, outdoor air sucked from the outdoor air suction hole 72a is guided by the outdoor air passage guide 75, exchanges heat with indoor air through the heat exchanger 64, passes through the air supply fan 84, and is internally sucked through the indoor air discharge hole 82a.

Conversely, as depicted in Fig. 8, when the air exhaust fan 74 is operated, indoor air sucked from the indoor air suction hole 82b is guided by the indoor air passage guide 85, exchanges heat with outdoor air through the heat exchanger 64, passes through the air exhaust fan 74, and is externally discharged through the outdoor air discharge hole 72b.
The ventilator externally discharges contaminated indoor air and internally sucks fresh outdoor air to maintain the room pleasant, by repeating the procedure.

The ventilator was explained in detail on the basis of the embodiments and accompanying drawings of the present invention. However, it is understood that the present invention should not be limited to these preferred embodiments but various changes and modifications can be made by one skilled in the art within the scope of the present invention as hereinafter claimed.

## Claims

1. A ventilator, comprising:
a heat exchange unit (60) having a heat exchanger (64) for exchanging heat by crossing outdoor air and indoor air along first and second passages;
an outdoor unit (70) being installed in one side of the heat exchange unit (60) to be connected or disconnected, having an outdoor air suction hole (72a) for sucking outdoor air and an indoor air discharge hole (72b) for discharging indoor air, and including a first air blowing fan inside; and
an indoor unit (80) being installed in the other side of the heat exchange unit (60) to be connected or disconnected, having an outdoor air discharge hole (82a) for discharging outdoor air and an indoor air suction hole (82b) for sucking indoor air, and including a second air blowing fan inside,
wherein the heat exchange unit (60), the outdoor unit (70), and the indoor unit (80) form separate casings (62, 72, 82), respectively, and the separate casings (72, 82) of the outdoor unit (70) and the indoor unit (80) can be connected and disconnected to/from the casing (62) of heat exchange unit (60) so that the separate casings (62, 72, 82) form a whole ventilator casing,
**characterized in that**, guide rails (94) are formed on the top and bottom surfaces of one side of the outdoor unit (70) facing the outdoor air suction hole (72a), and guide grooves (92) engaged with the guide rails (94) are formed on the top and bottom surfaces of one side of the heat exchanger (64), so that the outdoor unit (70) can be slidably connected or disconnected to/from the heat exchange unit (60).

2. A ventilator, comprising:
a heat exchange unit (60) having a heat exchanger (64) for exchanging heat by crossing outdoor air and indoor air along first and second passages;
an outdoor unit (70) being installed in one side of the heat exchange unit (60) to be connected or disconnected, having an outdoor air suction hole (72a) for sucking outdoor air and an indoor air discharge hole (72b) for discharging indoor air, and including a first air blowing fan inside; and
an indoor unit (80) being installed in the other side of the heat exchange unit (60) to be connected or disconnected, having an outdoor air discharge hole (82a) for discharging outdoor air and an indoor air suction hole (82b) for sucking indoor air, and including a second air blowing fan inside,
wherein the heat exchange unit (60), the outdoor unit (70), and the indoor unit (80) form separate casings (62, 72, 82), respectively, and the separate casings (72, 82) of the outdoor unit (70) and the indoor unit (80) can be connected and disconnected to/from the casing (62) of heat exchange unit (60) so that the separate casings (62, 72, 82) form a whole ventilator casing,
**characterized in that**, guide rails (94) are formed on the top and bottom surfaces of one side of the indoor unit (80) facing the indoor air suction hole (82b), and guide grooves (92) engaged with the guide rails (94) are formed on the top and bottom surfaces of the other side of the heat exchanger (64), so that the indoor unit (80) can be slidably connected or disconnected to/from the heat exchange unit (60).

3. The ventilator of claim 1 or 2, wherein an outdoor air passage guide (75) for guiding outdoor air sucked from the outdoor air suction hole (72) to the first passages of the heat exchanger (64) is formed in the outdoor unit (70).

4. The ventilator of claim 3, wherein an indoor air passage guide (85) for guiding indoor air sucked from the indoor air suction hole (82b) to the second passages of the heat exchanger (64) is formed in the indoor unit (80).

5. The ventilator of claim 1 or 2, wherein the first air blowing fan is an air exhaust fan (74) installed inside the indoor air discharge hole (72b), for discharging indoor air.

6. The ventilator of claim 1 or 2, wherein the second air blowing fan is an air supply fan (84) installed inside the outdoor air discharge hole (82a), for sucking outdoor air.

7. The ventilator of claim 1 or 2, wherein the outdoor air suction hole (72a) is formed in one side of one surface of the outdoor unit (70), and the outdoor air discharge hole (82a) is formed in the center of one surface of the indoor unit (80).

8. The ventilator of claim 7, wherein the indoor air suction hole (82b) is formed in the other side of one surface of the indoor unit (80), and the indoor air discharge hole (72b) is formed in the center of one surface of the outdoor unit (70).

9. The ventilator of claim 1, wherein one of casings (72, 62) of the outdoor unit (70) and the heat exchange unit (60) is positioned outside the other casing (72, 62).

10. The ventilator of claim 2, wherein one of casings (82, 62) of the indoor unit (80) and the heat exchange unit (60) is positioned outside the other casing (82, 62).

11. The ventilator of claim 4, wherein sealing guide grooves (102a, 102b) are formed on one side surfaces of the outdoor unit (70) and the indoor unit (80), and guide rails (94) are formed in both ends of the heat exchanger (64) to be engaged with the sealing guide grooves (102a, 102b).

12. The ventilator of claim 11, wherein the sealing guide grooves (102a, 102b) are formed in the ends of the outdoor air passage guide (75) and the indoor air passage guide (85), respectively.

13. The ventilator of claim 12, wherein assembly directions of the sealing guide groove (102a) formed in the outdoor air passage guide (75) and the sealing guide rail (104a) formed in one side end of the heat exchanger (64) are identical to sliding assembly directions of the outdoor unit (70) and the heat exchange unit (60).

14. The ventilator of claim 12, wherein assembly directions of the sealing guide grove (102b) formed in the indoor air passage guide (85) and the sealing guide rail (104b) formed in the other side end of the heat exchanger (64) are identical to sliding assembly directions of the indoor unit (80) and the heat exchange unit (60).

15. The ventilator of claim 12, wherein assembly directions of the sealing guide groove (102a) formed in the outdoor air passage guide (75) and the sealing guide rail (104a) formed in one side end of the heat exchanger (64) are identical to assembly directions of the sealing guide groove (102b) formed in the indoor air passage guide (85) and the sealing guide rail (104b) formed in the other side end of the heat exchanger (64).

## Patentansprüche

1. Ventilator mit:
einer Wärmetauscheinheit (60) mit einem Wärmetauscher (64) zum Austauschen von Wärme wobei Außenluft und Innenluft ersten und zweite Durchgänge der Länge nach durchqueren;
einer Außeneinheit (70), die in einer Seite der Wärmetauschereinheit (60) eingebaut ist, um damit verbunden oder davon getrennt zu werden, mit einem Außenluftansaugloch (72a) zum Ansaugen von Außenluft und einem Innenluftaustragungsloch (72b) zum Austragen von Innenluft und die innen einen ersten Luftblasventilator umfasst; und
einer Inneneinheit (80), die in der anderen Seite der Wärmetauschereinheit (60) eingebaut ist, um damit verbunden oder davon getrennt zu werden, mit einem Außenluftaustragungsloch (82a) zum Austragen von Außenluft und einem Innenluftansaugloch (82b) zum Ansaugen von Innenluft und die innen einen zweiten Luftblasventilator umfasst,
wobei die Wärmetauscheinheit (60), die Außeneinheit (70) und die Inneneinheit (80) jeweils separate Gehäuse (62, 72, 82) bilden und die separaten Gehäuse (72, 82) der Außeneinheit (70) und der Inneneinheit (80) mit dem Gehäuse (62) der Wärmetauscheinheit (60) verbunden oder davon getrennt werden können, sodass die separaten Gehäuse (62, 72, 82) ein ganzes Ventilatorgehäuse bilden,
**dadurch gekennzeichnet, dass**
Führungsschienen (94) an den oberen und unteren Flächen einer Seite der Außeneinheit (70), die dem Außenluftansaugloch (72a) gegenüberliegen, gebildet sind und Führungsnuten (92) in Eingriff mit den Führungsschienen (94) an den oberen und unteren Flächen von einer Seite des Wärmetauschers (64) gebildet sind, so dass die Außeneinheit (70) gleitend mit der Wärmetauscheinheit (60) verbunden oder davon getrennt werden kann.

2. Ventilator mit:
einer Wärmetauscheinheit (60) mit einem Wärmetauscher (64) zum Austauschen von Wärme wobei Außenluft und Innenluft ersten und zweite Durchgänge der Länge nach durchqueren;
einer Außeneinheit (70), die in einer Seite der Wärmetauschereinheit (60) eingebaut ist, um damit verbunden oder davon getrennt zu werden, mit einem Außenluftansaugloch (72a) zum Ansaugen von Außenluft und einem Innenluftaustragungsloch (72b) zum Austragen von Innenluft und die innen einen ersten Luftblasventilator umfasst; und
einer Inneneinheit (80), die in der anderen Seite der Wärmetauschereinheit (60) eingebaut ist, um damit verbunden oder davon getrennt zu werden, mit einem Außenluftaustragungsloch (82a) zum Austragen von Außenluft und einem Innenluftansaugloch (82b) zum Ansaugen von Innenluft und die innen einen zweiten Luftblasventilator umfasst,
wobei die Wärmetauschereinheit (60), die Außeneinheit (70) und die Inneneinheit (80) jeweils separate Gehäuse (62, 72, 82) bilden und die separaten Gehäuse (72, 82) der Außeneinheit (70) und der Inneneinheit (80) mit dem Gehäuse (62) der Wärmetauschereinheit (60) verbunden oder davon getrennt werden können, sodass die separaten Gehäuse (62, 72, 82) ein ganzes Ventilatorgehäuse bilden,
**dadurch gekennzeichnet, dass**
Führungsschienen (94) an den oberen und unteren Flächen einer Seite der Inneneinheit (80) gebildet sind, die dem Innenluftansaugloch (82b) gegenüberliegen und Führungsnuten (92) in Eingriff mit den Führungsschienen (94) an den oberen und unteren Flächen von der anderen Seite des Wärmetauschers (64) gebildet sind, so dass die Inneneinheit (80) gleitend mit der Wärmetauscheinheit (60) verbunden oder davon getrennt werden kann.

3. Ventilator nach Anspruch 1 oder 2,
wobei eine Außenluftdurchgangsführung (75) zum Führen von aus dem Außenluftansaugloch (72) angesaugter Außenluft zu den ersten Durchgängen des Wärmetauschers (64) in der Außeneinheit (70) gebildet ist.

4. Ventilator nach Anspruch 3,
wobei eine Innenluftdurchgangsführung (85) zum Führen von aus dem Innenluftansaugloch (82b) angesaugter Innenluft zu den zweiten Durchgängen des Wärmetauschers (64) in der Inneneinheit (80) gebildet ist.

5. Ventilator nach Anspruch 1 oder 2,
wobei der erste Luftblasventilator ein in dem Innenluftaustragungsloch (72b) eingebauter Luftausstoßventilator (74) zum Austragen von Innenluft ist.

6. Ventilator nach Anspruch 1 oder 2,
wobei der zweite Luftblasventilator ein in dem Außenluftaustragungsloch (82a) eingebauter Luftzuführungsventilator (84) zum Ansaugen von Außenluft ist.

7. Ventilator nach Anspruch 1 oder 2,
wobei das Außenluftansaugloch (72a) in einer Seite einer Fläche der Außeneinheit (70) gebildet ist, und das Außenluftaustragungsloch (82a) im Zentrum von einer Fläche der Inneneinheit (80) gebildet ist.

8. Ventilator nach Anspruch 7,
wobei das Innenluftansaugloch (82b) in der anderen Seite einer Fläche der Inneneinheit (80) gebildet ist, und das Innenluftaustragungsloch (72b) im Zentrum von einer Fläche der Außeneinheit (70) gebildet ist.

9. Ventilator nach Anspruch 1,
wobei eines der Gehäuse (72, 62) der Außeneinheit (70) und der Wärmetauscheinheit (60) außerhalb des anderen Gehäuses (72, 62) positioniert ist.

10. Ventilator nach Anspruch 2,
wobei eines der Gehäuse (82, 62) der Inneneinheit (80) und der Wärmetauscheinheit (60) außerhalb des anderen Gehäuses (82, 62) positioniert ist.

11. Ventilator nach Anspruch 4,
wobei dichtende Führungsnuten (102a, 102b) an einer Seitenfläche der Außeneinheit (70) und der Inneneinheit (80) gebildet sind, und Führungsschienen (94) an beiden Enden des Wärmetauschers (64) gebildet sind, um mit den dichtenden Führungsnuten (102a, 102b) in Eingriff zu stehen.

12. Ventilator nach Anspruch 11,
wobei die dichtenden Führungsnuten (102a, 102b) jeweils in den Enden der Außenluftdurchgangsführung (75) und der Innenluftdurchgangsführung (85) gebildet sind.

13. Ventilator nach Anspruch 12,
wobei die Anordnungsrichtungen der in der Außenluftdurchgangsführung (75) gebildeten dichtenden Führungsnut (102a) und der in einem Seitenende des Wärmetauschers (64) gebildeten dichtenden Führungsschiene (104a) zu den gleitenden Anordnungsrichtungen der Außeneinheit (70) und der Wärmetauschereinheit (60) identisch sind.

14. Ventilator nach Anspruch 12,
wobei die Anordnungsrichtungen der in der Innenluftdurchgangsführung (85) gebildeten dichtenden Führungsnut (102b) und der im anderen Seitenende des Wärmetauschers (64) gebildeten dichtenden Führungsschiene (104b) zu den gleitenden Anordnungsrichtungen der Inneneinheit (80) und der Wärmetauschereinheit (60) identisch sind.

15. Ventilator nach Anspruch 12,
wobei die Anordnungsrichtungen der in der Außenluftdurchgangsführung (75) gebildeten dichtenden Führungsnut (102a) und der in einem Seitenende des Wärmetauschers (64) gebildeten dichtenden Führungsschiene (104a) identisch sind zu den Anordnungsrichtungen der in der Innenluftdurchgangsführung (85) gebildeten dichtenden Führungsnut (102b) und der im anderen Seitenende des Wärmetauschers (64) gebildeten dichtenden Führungsschiene (104b).

## Revendications

1. Ventilateur, comprenant :
une unité d'échange thermique (60) ayant un échangeur de chaleur (64) pour échanger de la chaleur en faisant se croiser de l'air extérieur et de l'air intérieur le long de premiers et de deuxièmes passages ;
une unité extérieure (70) installée sur un côté de l'unité d'échange thermique (60) pour être raccordée ou désaccouplée, ayant un orifice (72a) d'aspiration d'air extérieur pour aspirer de l'air extérieur et un orifice (72b) d'évacuation d'air intérieur pour évacuer de l'air intérieur, et comprenant un premier ventilateur de refoulement d'air à l'intérieur ; et
une unité intérieure (80) installée de l'autre côté de l'unité d'échange thermique (60) pour être raccordée ou désaccouplée, ayant un orifice (82a) d'évacuation d'air extérieur pour évacuer de l'air extérieur et un orifice (82b) d'aspiration d'air intérieur pour aspirer de l'air intérieur, et comprenant un deuxième ventilateur de refoulement d'air à l'intérieur,
dans lequel l'unité d'échange thermique (60), l'unité extérieure (70) et l'unité intérieure (80) forment des boîtiers séparés (62, 72, 82), respectivement, et les boîtiers séparés (72, 82) de l'unité extérieure (70) et de l'unité intérieure (80) peuvent être raccordés et désaccouplés au/du boîtier (62) de l'unité d'échange thermique (60) de façon que les boîtiers séparés (62, 72, 82) forment un boîtier de ventilateur complet,
***caractérisé en ce que*** des rails de guidage (94) sont formés sur les surfaces de dessus et de dessous d'un côté de l'unité extérieure (70) faisant face à l'orifice (72a) d'aspiration d'air extérieur, et des rainures de guidage (92) engagées avec les rails de guidage (94) sont formées sur les surfaces de dessus et de dessous d'un côté de l'échangeur de chaleur (64), de façon que l'unité extérieure (70) puisse être raccordée ou désaccouplée de manière coulissante à/de l'unité d'échange thermique (60).

2. Ventilateur, comprenant :
une unité d'échange thermique (60) ayant un échangeur de chaleur (64) pour échanger de la chaleur en faisant se croiser de l'air extérieur et de l'air intérieur le long de premiers et de deuxièmes passages ;
une unité extérieure (70) installée sur un côté de l'unité d'échange thermique (60) pour être raccordée ou désaccouplée, ayant un orifice (72a) d'aspiration d'air extérieur pour aspirer de l'air extérieur et un orifice (72b) d'évacuation d'air intérieur pour évacuer de l'air intérieur, et comprenant un premier ventilateur de refoulement d'air à l'intérieur; et
une unité intérieure (80) installée de l'autre côté de l'unité d'échange thermique (60) pour être raccordée ou désaccouplée, ayant un orifice (82a) d'évacuation d'air extérieur pour évacuer de l'air extérieur et un orifice (82b) d'aspiration d'air intérieur pour aspirer de l'air intérieur, et comprenant un deuxième ventilateur de refoulement d'air à l'intérieur,
dans lequel l'unité d'échange thermique (60), l'unité extérieure (70) et l'unité intérieure (80) forment des boîtiers séparés (62, 72, 82), respectivement, et les boîtiers séparés (72, 82) de l'unité extérieure (70) et de l'unité intérieure (80) peuvent être raccordés ou désaccouplés au/du boîtier (62) de l'unité d'échange thermique (60) de façon que les boîtiers séparés (62, 72, 82) forment un boîtier de ventilateur complet,
***caractérisé* e*****n ce que*** des rails de guidage (94) sont formés sur les surfaces de dessus et de dessous d'un côté de l'unité intérieure (80) faisant face à l'orifice (82b) d'aspiration d'air intérieur, et des rainures de guidage (92) engagées avec les rails de guidage (94) sont formées sur les surfaces de dessus et de dessous de l'autre côté de l'échangeur de chaleur (64), de façon que l'unité intérieure (80) puisse être raccordée ou désaccouplée de manière coulissante à/de l'unité d'échange thermique (60).

3. Ventilateur selon la revendication 1 ou 2, dans lequel un guide (75) de passage d'air extérieur, destiné à guider de l'air extérieur aspiré depuis l'orifice (72) d'aspiration d'air extérieur vers les premiers passages de l'échangeur de chaleur (64), est formé dans l'unité extérieure (70).

4. Ventilateur selon la revendication 3, dans lequel un guide (85) de passage d'air intérieur, destiné à guider de l'air intérieur aspiré depuis l'orifice (82b) d'aspiration d'air intérieur vers les deuxièmes passages de l'échangeur de chaleur (64) est formé dans l'unité intérieure (80).

5. Ventilateur selon la revendication 1 ou 2, dans lequel le premier ventilateur de refoulement d'air est un ventilateur (74) d'extraction d'air installé à l'intérieur de l'orifice (72b) d'évacuation d'air intérieur, pour évacuer de l'air intérieur.

6. Ventilateur selon la revendication 1 ou 2, dans lequel le deuxième ventilateur de refoulement d'air est un ventilateur (84) d'alimentation en air installé à l'intérieur de l'orifice (82a) d'évacuation d'air extérieur, pour aspirer de l'air extérieur.

7. Ventilateur selon la revendication 1 ou 2, dans lequel l'orifice (72a) d'aspiration d'air extérieur est formé sur un côté d'une surface de l'unité extérieure (70), et l'orifice (82a) d'évacuation d'air extérieur est formé au centre d'une surface de l'unité intérieure (80).

8. Ventilateur selon la revendication 7, dans lequel l'orifice (82b) d'aspiration d'air intérieur est formé sur l'autre côté d'une surface de l'unité intérieure (80), et l'orifice (72b) d'évacuation d'air intérieur est formé au centre d'une surface de l'unité extérieure (70).

9. Ventilateur selon la revendication 1, dans lequel l'un des boîtiers (72, 62) de l'unité extérieure (70) et de l'unité d'échange thermique (60) est placé à l'extérieur de l'autre boîtier (72, 62).

10. Ventilateur selon la revendication 2, dans lequel l'un des boîtiers (82, 62) de l'unité intérieure (80) et de l'unité d'échange thermique (60) est placé à l'extérieur de l'autre boîtier (82, 62).

11. Ventilateur selon la revendication 4, dans lequel des rainures de guidage et d'étanchéité (102a, 102b) sont formées sur l'une des surfaces latérales de l'unité extérieure (70) et de l'unité intérieure (80), et les rails de guidage (94) sont formés aux deux extrémités de l'échangeur de chaleur (64) de manière à s'engager avec les rainures de guidage et d'étanchéité (1 02a, 102b).

12. Ventilateur selon la revendication 11, dans lequel les rainures de guidage et d'étanchéité (1 02a, 102b) sont respectivement formées aux extrémités du guide (75) de passage d'air extérieur et du guide (85) de passage d'air intérieur.

13. Ventilateur selon la revendication 12, dans lequel des directions d'assemblage de la rainure de guidage et d'étanchéité (102a) formée dans le guide (75) de passage d'air extérieur et du rail de guidage et d'étanchéité (104a) formé dans une extrémité latérale de l'échangeur de chaleur (64) sont identiques aux directions d'assemblage par coulissement de l'unité extérieure (70) et de l'unité d'échange thermique (60).

14. Ventilateur selon la revendication 12, dans lequel les directions d'assemblage de la rainure de guidage et d'étanchéité (102b) formée dans le guide (85) de passage d'air intérieur et du rail de guidage et d'étanchéité (1 04b) formé dans l'autre extrémité latérale de l'échangeur de chaleur (64) sont identiques aux directions d'assemblage par coulissement de l'unité intérieure (80) et de l'unité d'échange thermique (60).

15. Ventilateur selon la revendication 12, dans lequel les directions d'assemblage de la rainure de guidage et d'étanchéité (1 02a) formée dans le guide (75) de passage d'air extérieur et du rail de guidage et d'étanchéité (104a) formé dans une extrémité latérale de l'échangeur de chaleur (64) sont identiques aux directions d'assemblage de la rainure de guidage et d'étanchéité (1 02b) formée dans le guide (85) de passage d'air intérieur et du rail de guidage et d'étanchéité (104b) formé dans l'autre extrémité latérale de l'échangeur de chaleur (64).
